# EUROPEAN PATENT SPECIFICATION

(11) **EP 3 822 468 B1**
(45) Date of publication and mention of the grant of the patent: **03.04.2024**
(21) Application number: 19209834.1
(22) Date of filing: 18.11.2019
(51) Int. Cl.: F02C 6/00, F02C 7/22, F02C 7/228, F02C 7/232, F02C 9/26, F23C 6/04

(54) **GAS TURBINE ENGINE OPERABLE AT VERY LOW PARTIAL LOAD AND METHOD OF CONTROLLING A GAS TURBINE ENGINE**
BEI SEHR NIEDRIGER TEILBELASTUNG BETREIBBARES GASTURBINENTRIEBWERK UND VERFAHREN ZUR STEUERUNG EINES GASTURBINENTRIEBWERKS
TURBINE À GAZ POUVANT FONCTIONNER À TRÈS FAIBLE CHARGE PARTIELLE ET PROCÉDÉ DE COMMANDE D'UNE TURBINE À GAZ

(43) Date of publication of application: 19.05.2021
(73) Proprietor: Ansaldo Energia Switzerland AG, 5400 Baden (CH)
(72) Inventor: RINN, Joerg, 5400 BADEN (CH); JAKOBY, Ralf, 5400 BADEN (CH); KELLERER, Rudolf, 5400 BADEN (CH); STUDERUS, Adrien, 5400 BADEN (CH); BURRI, Daniel, 5400 BADEN (CH); APPEL, Christoph, 5400 BADEN (CH)
(74) Representative: Studio Torta S.p.A.

(56) References cited:
- EP-A1- 2 846 022
- US-A- 4 716 719
- US-A- 5 365 732
- US-A1- 2013 219 904

## Description

### TECHNICAL FIELD

The present invention relates to a gas turbine engine operable at very low partial load and to a method of controlling a gas turbine engine.

### BACKGROUND

As it is known, control of pollutant emissions is an objective of primary importance in design of any type of thermal machine and, in particular, of gas turbines for power plants. In fact, awareness of environmental risks drives towards regulations that set increasingly strict requirements. On the other hand, the organization of modern power market and the continuously variable demand do not allow to operate plants at constant load conditions. Instead, the need to meet demand fluctuations, including sudden rise or drop, and to contribute to control of grid frequency require quite flexible operation. The reduction of pollutant emissions, however, is made critical by such a flexible operation.

One of the problems to be addressed, for example, relates to operation at very low partial load. Reducing the number of active burners in a combustor assembly may not be sufficient to meet both market and law requirements and active burners are often exploited in the lowest part of their power range. Since the trend is toward ever-decreasing lower power limits, critical aspects are involved in terms of control and pollutant emissions. In the first place, very fine control is required to maintain stable combustion at the lower limit of the operational range. Control systems, however, need to cope with a broad range of conditions and full load operation is scarcely compatible with fine control at very low load. Moreover, CO emissions are not normally an issue at full load, but low temperature and instability at low load may prevent the complete oxidation of the carbon and favour the formation of carbon monoxide.

US 4,716,719 A discloses a gas turbine engine, comprising a combustor assembly with a plurality of burners. A fuel supply system supplies fuel to the burners and includes a fuel supply line and a main fuel valve arranged between the fuel supply line and the burners. A control unit controls the fuel flowrate using the main fuel valve in a first load range from full load to a threshold partial load. An auxiliary fuel valve fluidly is provided between the fuel supply line and at least a group of associated burners and the control unit controls the fuel flowrate using the auxiliary fuel valve in a second load range from the threshold partial load to a minimum load.

Other examples of known gas turbine engines are disclosed in EP 2 826 022 A1 and in US 5,365,732 A.

### SUMMARY OF THE INVENTION

It is an aim of the present invention to provide a gas turbine engine and a method of controlling a gas turbine engine, which allow to overcome or to attenuate at least in part the limitations described.

According to the present invention, there is provided a gas turbine engine, comprising:
a combustor assembly, having a plurality of burners;
a fuel supply system, configured to supply a fuel flowrate to the burners and including a fuel supply line and a main fuel valve between the fuel supply line and the burners;
a control unit, configured to control the fuel flowrate using the main fuel valve in a first load range from full load to a threshold partial load;
wherein the fuel supply system comprises an auxiliary fuel valve fluidly coupled between the fuel supply line and at least a group of associated burners;
and wherein the control unit is further configured to control the fuel flowrate using the auxiliary fuel valve in a second load range from the threshold partial load to a minimum load;
characterized in that the fuel supply system comprises a fuel plenum and the main fuel valve and the auxiliary fuel valve are arranged between the fuel supply line and the fuel plenum.

According to further aspect of the invention, there is provided a method of controlling a gas turbine engine comprising a combustor assembly, having a plurality of burners, the method comprising:
supplying a fuel flowrate to the burners;
controlling the fuel flowrate using a main fuel valve in a first load range from full load to a threshold partial load, the main fuel valve being arranged between a fuel supply line and a fuel plenum; and
controlling the fuel flowrate to at least a group of the burners using an auxiliary fuel valve in a second load range from the threshold partial load to a minimum load, the auxiliary fuel valve being arranged between the fuel supply line and the fuel plenum.

### BRIEF DESCRIPTION OF THE DRAWINGS

The present invention will now be described with reference to the accompanying drawings, which show some nonlimitative embodiment thereof, in which:
- figure 1 is a simplified block diagram of a gas turbine engine;
- figure 2 is a schematic view of a combustor assembly and a portion of a fuel supply system incorporated in the gas turbine engine of figure 1 and made in accordance with one embodiment of the present invention;

- figure 3A is a graph showing quantities used in the gas turbine engine of figure 1 in an operating mode;
- figure 3B is a graph showing quantities used in the gas turbine engine of figure 1 in another operating mode;
- figures 4-16 show the combustor assembly of figure 1 in respective different operating conditions;
- figure 17 is a schematic view of a combustor assembly and a portion of a fuel supply system incorporated in a gas turbine engine in accordance with another embodiment of the present invention;
- figure 18 is a schematic view of a combustor assembly and a portion of a fuel supply system incorporated in a gas turbine engine not falling within the scope of the claims; and
- figures 19-20 show the combustor assembly of figure 1 in respective further different operating conditions.

### DETAILED DESCRIPTION OF EXEMPLARY EMBODIMENTS

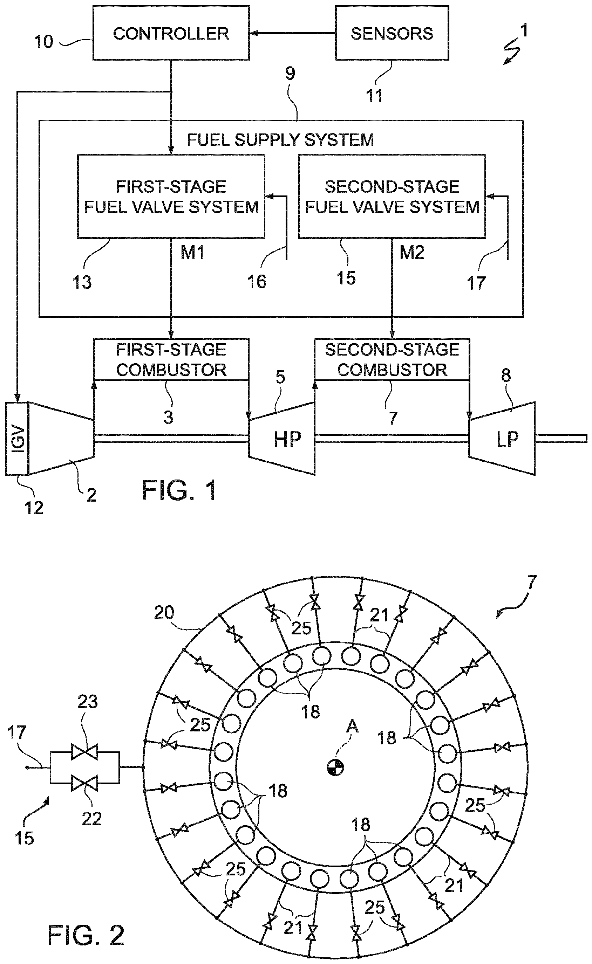

Figure 1 shows a simplified view of a gas turbine engine, designated as whole with numeral 1. The gas turbine engine 1 comprises a compressor 2, a first-stage combustor 3, a high-pressure turbine 5, a second-stage combustor 7 (also referred to as sequential combustor) and a low-pressure turbine 8.

A fuel supply system 9 delivers fuel flowrates for operation of the first-stage combustor 3 and the second-stage combustor 7.

A controller 10 receives state signals from system sensors 11 and operates the gas turbine through actuators to provide a controlled power output. The actuators include orientable inlet guide vanes 12 of the compressor 2 and a first-stage fuel valve system 13 and a second-stage fuel valve system 15 of the fuel supply system 9.

A flow of compressed air supplied by the compressor 2 is added with a first fuel flowrate M1 and the air/fuel mixture thus obtained is burnt in the first-stage combustor 3. The exhaust gas of the first-stage combustor 3 is expanded in the high-pressure turbine 5, then, after possibly adding a flow of diluting air, a second fuel flowrate M2 is mixed and burnt in the second-stage combustor 7. The exhaust gas is finally expanded in the low-pressure turbine 8 and discharged either to the outside or e.g. to a heat recovery steam generator. The first fuel flowrate M1 and the second fuel flowrate M2 from supply lines 16, 17 are controlled by the controller 10 using the first-stage fuel valve system 13 and the second-stage fuel valve system 15, respectively.

Figure 2 schematically shows the second-stage fuel valve system 15 and the second-stage combustor 7, which comprises a plurality of burners 18 circumferentially arranged about a machine axis A.

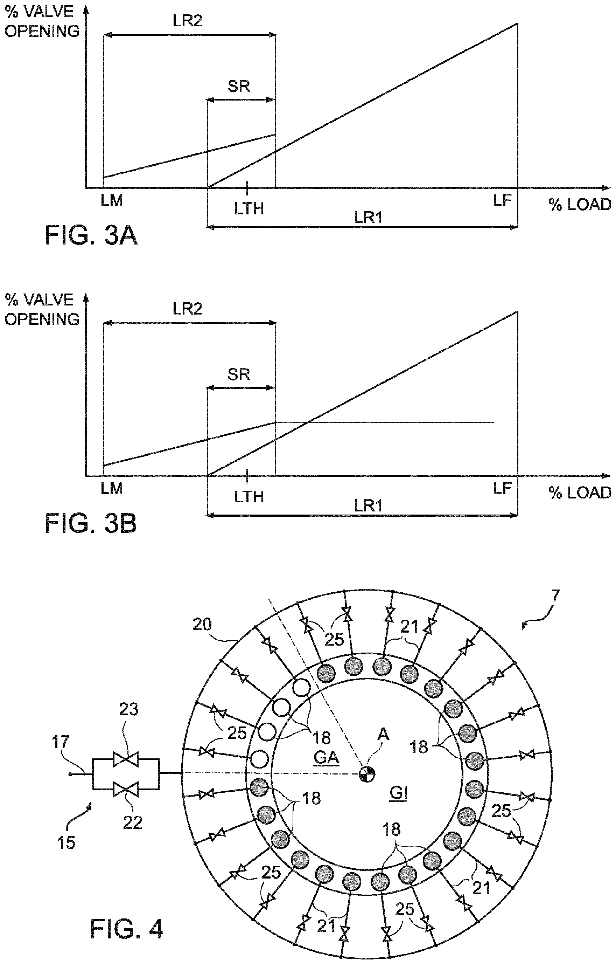

Fuel is supplied to the burners 18 through the supply line 17, the second-stage fuel valve system 15, a fuel plenum 20 and respective supply ducts 21. More precisely, the second-stage fuel valve system 15 comprises a main fuel valve 22 and an auxiliary fuel valve 23, both controlled by the controller 10 and having respective inlets connected to the supply line 17 and respective outlets connected to the fuel plenum 20. Thus, in the embodiment of figure 2 the main fuel valve 22 and the auxiliary fuel valve 23 are arranged in parallel. The main fuel valve 22 is sized to be operated with fuel flowrates corresponding to load in a first load range LR1 that includes full load LF down and a threshold partial load LTH (see figures 3A and 3B). The auxiliary fuel valve 23 is sized to be operated with fuel flowrates corresponding to load in a second load range LR2 that includes the threshold partial load LTH down and a minimum load LM. For example, the main fuel valve 22 has a first minimum rated flowrate and the auxiliary fuel valve 23 has a second minimum rated flowrate lower than the first minimum rated flowrate.

The supply ducts 21 extend from the fuel plenum 20 and inlets of respective burners 18.

Shut-off valves 25 are arranged along the supply ducts 21, a respective one for each burner 18. Thus, the shut-off valves 25 are arranged between the main fuel valve 22 and fuel inlets of the respective burners 18. The shut-off valves 25 are independently controlled by the controller 10, so that the controller 10 may activate and deactivate each burner 18 independently of the other burners 18.

The controller 10 is configured to control fuel flowrates fed to the burners 18 using the main fuel valve 22 and/or the auxiliary fuel valve 23 depending on the current load setpoint for the gas turbine engine 1. For load setpoints in the first load range LR1, from full load down to the threshold partial load LTH, the controller 10 adjusts the main fuel valve 22, whereas the auxiliary control valve 23 is not involved in flowrate control and may be kept closed (figure 3A) or completely open (figure 3B) or in any case partially open in a fixed configuration. Outside of the second load range LR2, the auxiliary fuel valve 23 may be kept open, thus providing a constant contribution to the overall fuel flowrate supplied to the burners 18, or may be closed, depending on design preferences. The contribution of the auxiliary fuel valve 23 is in any case less than the contribution of the main fuel valve 22, which may be designed and optimized for high-load operation.

For load setpoints in the second load range LR2, from the threshold partial load LTH to minimum load LM, the controller 10 adjusts the auxiliary fuel valve 23. Outside the first load range LR1, the main fuel valve 22 is closed by the controller 10, so that control at very low partial load is left to the auxiliary fuel valve 23, which may be specifically designed for this purpose.

In one embodiment, the first load range LR1 and the second load range LR2 may overlap in a subrange SR including the threshold partial load LTH (figures 3A and 3B). In the subrange SR, both the main fuel valve 22 and the auxiliary fuel valve 23 may be used by the controller 10 for the purpose of flowrate control.

The controller 10 is further configured to deactivate at least a threshold number of burners 18 before starting using the auxiliary fuel valve 23. In the example of figure 4, M = 24 is the total number of burners 18 and NTH = 20 is the threshold number and K = M - NTH = 4 is the number of the burners 18 maintained active at the time the controller 10 starts using the auxiliary fuel valve 23. The number of active burners 18 may be further reduced to reach still lower load conditions.

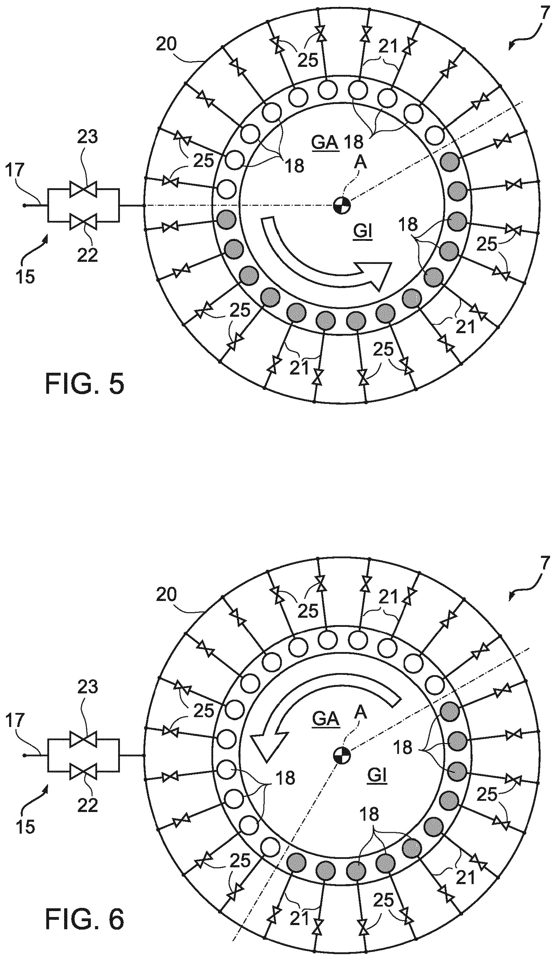

Activation and deactivation of the burners 18 is accomplished by the controller 10 through the shut-off valves 25, which can be individually and independently operated. The controller 10 is configured to activate and deactivate the burners so that, in any operation condition and independently of the number of active burners 18, the active burners 18 form a single group of adjacent active burners 18 and the inactive burners 18 form a single group of adjacent inactive burners 18. When all the burners 18 are active, the controller 10 initially deactivates a first one of the burners 18 and then deactivates in succession active burners 18 which are adjacent to an inactive burner 18, as illustrated by way of example in figure 5. Accordingly, all active burners 18 are adjacent to one another and form a single group of active burners GA and all the inactive burners 18 are adjacent to one another and form a single group of inactive burners GI.

Likewise, after at least one burner 18 has been initially activated from a shut-off condition of the whole second-stage combustor 7, the controller 10 sequentially activates inactive burners 18 which are adjacent to an active burner 18, as shown in figure 6. The burner 18 are at any time divided into the single group of active burners GA and the single group of inactive burners GI, although the composition of each one of the single group of active burners GA and the single group of inactive burners GI changes during operation.

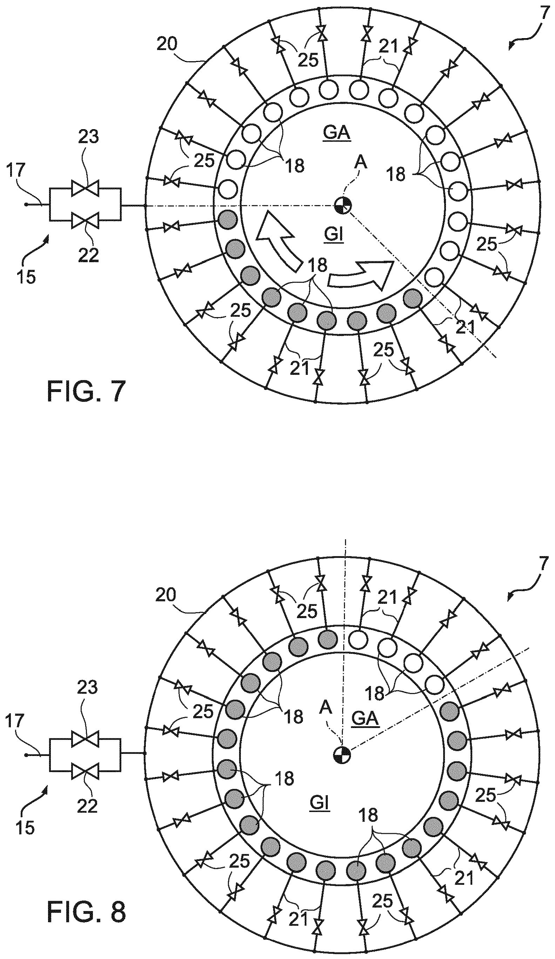

Activation and deactivation of the burners 18 may follow any pattern, in principle, provided that all active burners 18 are adjacent to one another in the single group of active burners GA and all the inactive burners 18 are adjacent to one another in the single group of inactive burners GI at any time. By way of example, figures 7 and 8 show another possible pattern of activation and deactivation of the burners 18. In this case, starting from a burner 18 deactivated first, the other burners 18 are alternately deactivated one in a clockwise direction and one in a counterclockwise direction, until the configuration of figure 8 is reached.

The controller 10 is also configured to modify the single group of active burners GA and the single group of inactive burners GI so that the active burners 18 vary not only during load transients, but also at steady low load operation at least from time to time. In particular, the controller 10 is configured to control the burners 18 so that:
- the same number of adjacent burners 18 is maintained active in a first low load condition and in a second low load condition; and
- at least one of the burners 18 which are active in the first low load condition is inactive in the second low load condition and at least one of the burners 18 which are inactive in the first low load condition is active in the second low load condition.

The first low load condition and the second low load condition may include, respectively, a load setpoint within a low load range during a first time interval and the load setpoint within the low load range during a second time interval, distinct from the first time interval.

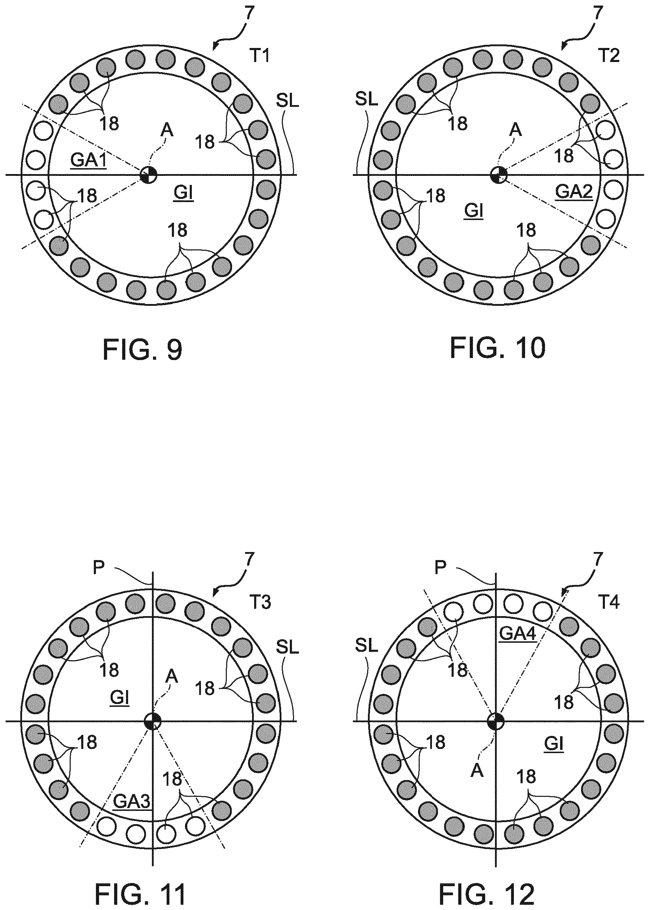

In one embodiment, the controller 10 changes the activation pattern of the burners 18 at every load cycle. For example, in one load cycle (T1, figure 9) a first single group of active burners GA1 is selected and comprises burners 18 symmetrically arranged across a split line SL on a first side of the gas turbine engine 1. In a second subsequent load cycle (T2, figure 10), a second single group of active burners GA2 is selected and comprises burners 18 symmetrically arranged across a split line SL on a second side of the gas turbine engine 1, opposite to the first side. In practice, the burners 18 active in the second load cycle are symmetrically opposite to the burners 18 active in the first load cycle. Then, in a third load cycle (T3, figure 11), a third single group of active burners GA3 is selected and comprises burners 18 symmetrically arranged across a plane P perpendicular to the split line SL at the bottom of the gas turbine engine 1. In a fourth load cycle (T4, figure 12), a fourth single group of active burners GA4 is selected and comprises burners 18 symmetrically arranged across the plane P perpendicular to the split line SL at the top of the gas turbine engine 1, opposite to the burners 18 active during the third load cycle.

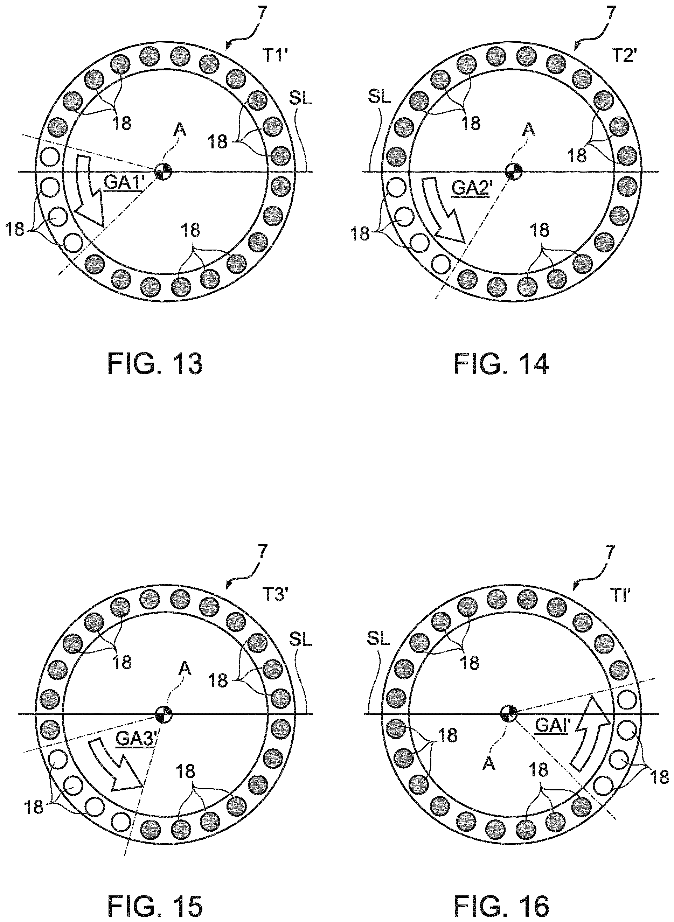

In another embodiment, illustrated in figures 13-16, the controller 10 changes the pattern of active burners 18 during each load cycle. In a first time interval T1 at the beginning of the load cycle (figure 13), a first single group of active burners GA1 is initially selected. Once the first time interval T1 has lapsed, the active burner 18 at one end of the first single group of active burners GA1 is deactivated and the inactive burner 18 adjacent to the opposite end of the first single group of active burners GA1 is activated. Accordingly, a second single group of active burners GA2 is obtained (figure 14), which is rotated e.g. counterclockwise and is maintained during a second time interval T2'. Likewise, in a subsequent third time interval T3' (figure 15) the controller 10 deactivates the active burner 18 at one end of the second single group of active burners GA2 and activates the inactive burner 18 adjacent to the opposite end of the second single group of active burners GA2, thus obtaining a third single group of active burners GA3 and rotating the pattern of active burners 18 of another step in the same direction, here counterclockwise. The controller 10 iteratively repeats the process of deactivating the active burner 18 at one end of the current single group of active burners and activating the inactive burner 18 adjacent to the opposite end of the current single group of active burners, thereby obtaining stepwise rotations in the same direction of the pattern of active burners single group of active burners. Figure 16 shows a I-th single group of active burners GAI rotated of I steps during a I-th time interval TI.

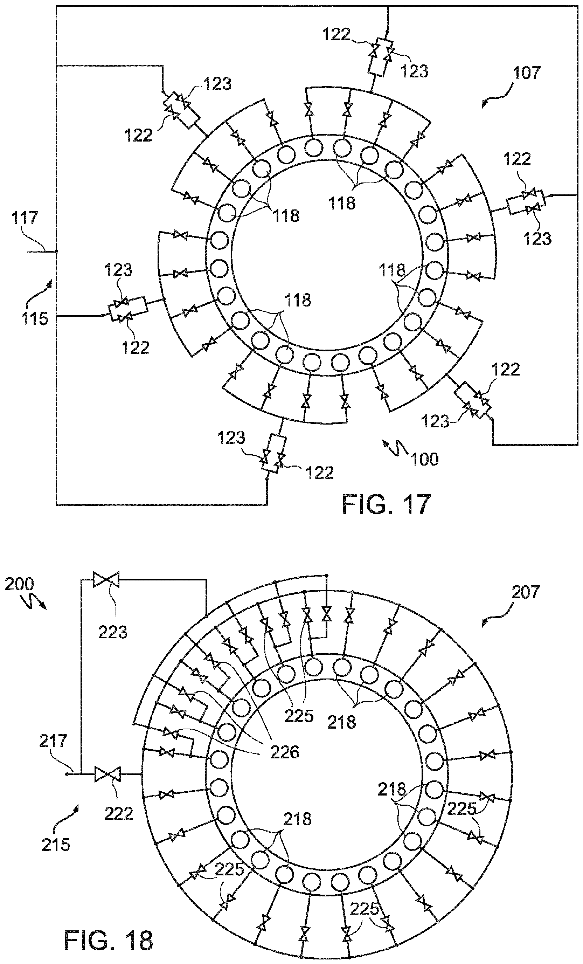

In the embodiment illustrated in figure 17, a gas turbine engine 100 comprises a combustor 107 and a fuel valve system 115 configured to feed the combustor 107 from a fuel supply line 117. The combustor 107 may be a single-stage combustor system, as well as a first-stage combustor or a second stage combustor of a two-stage (or sequential) combustor system. The fuel valve system 115 comprises a plurality of main fuel valves 122 and a plurality of auxiliary fuel valves 123. Each main fuel valve 122 and each auxiliary fuel valve 123 are fluidly coupled between the fuel supply line 117 and a group of respective associated burners 118. More specifically, each group of burners 118 is served by a respective main fuel valve 122 and a respective auxiliary fuel valve 123, which are connected in parallel between the fuel supply line 117 and inlets of the burners 118.

Figure 18 shows an example of a gas turbine engine not falling within the scope of the claims, here designated by 200 and comprising a combustor 207 and a fuel valve system 215 configured to feed the combustor 207 from a fuel supply line 217. The fuel valve system 215 comprises a main fuel valve 222 and an auxiliary fuel valve 223, which are fluidly coupled between the fuel supply line 217 and a group G of burners 218. Inlets of the burners 218 of the group G are connected to outlets of the main fuel valve 122 through respective main shut-off valves 225 and to outlets of the auxiliary fuel valve 223 through respective auxiliary shut off-valves 226.

Advantages of the invention are apparent from the exemplary embodiments described above.

Use of an auxiliary fuel valve dedicated to fuel control at low partial load allows very precise fuel supply over a broad range of operating conditions. The auxiliary fuel valve may in fact be selected for the low partial load range, so the gas turbine engine does not suffer from problems which affect the known combustors and derive from the need to operate the fuel supply valves at opposite ends of a broad range. According to the proposed solution, the main fuel valve is used for full load and high partial load down to a threshold load, which may be conveniently selected to avoid flame instability and critical combustion conditions. Then, the main fuel valve may be closed and fuel supply control is accomplished through the auxiliary fuel valve in a low load partial range, below the threshold load. Fuel supply control is very precise, because the auxiliary fuel valve need not be operated over a broad range. As a result, the overall load range of the gas turbine engine may be advantageously extended to very low partial load without affecting flame stability and highquality combustion and without exceeding limits set to pollutant emission, especially carbon monoxide. Partial load as low as around 10% of the base load can be reached.

The main fuel valve and the auxiliary fuel valve may be independently selected by the controller to optimize performance in respective flowrate ranges that yield corresponding load ranges.

The overlap in the subrange allows smooth transition between higher partial load range and lower partial load range, thus preventing possible causes of instability.

Individual and independent activation and deactivation of the burners allows to flexibly select strategies for transitions from full load to low partial load operating condition and the pattern of active burners at any partial load.

Tests at low partial loads revealed that the production of carbon monoxide is affected by the number of hot/cold interfaces, i.e. of active burners adjacent to inactive burners. Namely, the higher the number of hot/cold interfaces, the greater the production of carbon monoxide. Controlling activation and deactivation of the burners so that, in any operation condition, the active burners form a single group of adjacent active burners and the inactive burners form a single group of adjacent inactive burners leads to minimization of the hot/cold interfaces (two). Also production of carbon monoxide can be thus minimized.

Deactivating initially a first burner, when all the burners are active, and then deactivating in succession active burners adjacent to an inactive burner ensures that the number of the hot/cold interfaces is always kept minimum at two.

Alternating different patterns of active burners avoids that, at low partial load, some burners are always in use and other burners are always shut-off. Even at partial load, components downstream of the active burners are subjected to thermal and mechanical stress, that affects lifetime of the components. Since the compositions of the single group of active burners is frequently modified, ageing is substantially uniform and early exchange of the components in the hot zones is prevented. Average lifetime is thus increased and compliance with limits of pollutant emissions, especially carbon monoxide, is not affected. Strategies for change of the alternating patterns may be flexibly chosen in accordance with design preferences.

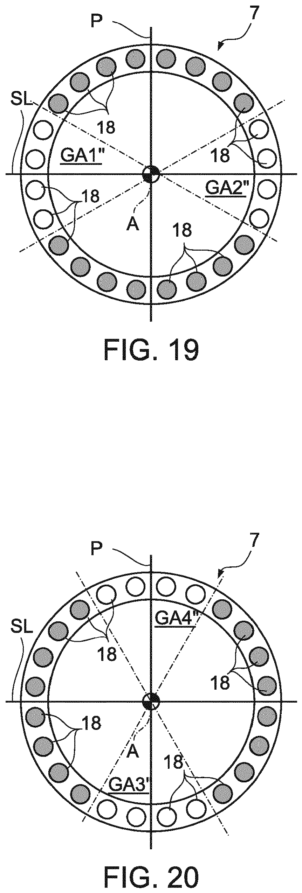

Even though keeping all active burners adjacent to one another is beneficial to low carbon monoxide emissions, modifying the pattern of active burners is still advantageous in terms of extended lifetime of the components and less frequent maintenance, even in case active burners form two or more groups. In the embodiment of figures 19 and 20, for example, the controller 10 at low partial load maintains two separate groups of burners 18 in the active state in two different configurations. The same number of burners 18 are active in both configurations and the same level of power output can be provided. However, individual burners 18 forming the two groups change over time. In a first partial load condition two first groups GA1", GA2" of burners 18 are active. For example, the two first groups GA1", GA2" may include burners 18 symmetrically arranged across the split plane SL and with respect to the machine axis A, at opposite sides of the gas turbine engine 1. In a second partial load condition, the controller 10 activates two second groups GA3", GA4" of burners 18, distinct from the two firsts groups GA1", GA2". For example, the two second groups GA3", GA4" may include burners 18 symmetrically arranged across a plane P perpendicular to the split plane SL and with respect to the machine axis A, at the top and at the bottom gas turbine engine 1. Hence, the configuration of the burners 18 in the second partial load condition is rotated of 90° with respect to the configuration in the first partial load condition. Advantageously, burners 18 in each of the groups GA1", GA2", GA3", GA4" are adjacent to one another.

Finally, it is evident that the described gas turbine engine and method may be subject to modifications and variations, without departing from the scope of the present invention, as defined in the appended claims.

In particular, the invention indifferently applies to gas turbine engines with single-stage combustor assemblies and two-stage or sequential combustor assemblies and, in the latter case, indifferently to the first-stage combustor and to the second-stage combustor. Moreover, the invention may be exploited for annular, can-annular and can combustor as required according to design preferences. High-pressure and low-pressure turbines or a single turbine may be present.

Groups of four active burners have been illustrated in the examples described. It is understood that the groups may include any suitable number of burners in accordance with design preferences.

## Claims

1. A gas turbine engine, comprising:
a combustor assembly (7; 107), having a plurality of burners (18; 118);
a fuel supply system (9), configured to supply a fuel flowrate (M2) to the burners (18; 118) and including a fuel supply line (17; 117) and a main fuel valve (22; 122) between the fuel supply line (17; 117) and the burners (18; 118);
a control unit (10), configured to control the fuel flowrate (M2) using the main fuel valve (22; 122) in a first load range (LR1) from full load to a threshold partial load;
wherein the fuel supply system (9) comprises an auxiliary fuel valve (23; 123) fluidly coupled between the fuel supply line (17; 117) and at least a group of associated burners (18; 118);
and wherein the control unit (10) is further configured to control the fuel flowrate (M2) using the auxiliary fuel valve (23; 123) in a second load range (LR2) from the threshold partial load (LTH) to a minimum load (ML);
**characterized in that** the fuel supply system (9) comprises a fuel plenum (20) and the main fuel valve (22; 122) and the auxiliary fuel valve (23; 123) are arranged between the fuel supply line (17; 117) and the fuel plenum (20) .

2. The gas turbine engine according to claim 1, wherein the main fuel valve (22; 122) has a first minimum rated flowrate (M2) and the auxiliary fuel valve (23; 123) has a second minimum rated flowrate (M2) lower than the first minimum rated flowrate (M2).

3. The gas turbine according to claim 1 or 2, wherein the first load range (LR1) and the second load range (LR2) overlap in a load subrange (SR) including the threshold partial load (LTH) and the control unit (10) is configured to close the main fuel valve (22; 122) outside the first load range (LR1).

4. The gas turbine engine according to any one the preceding claims, wherein the auxiliary fuel valve (23; 123) is arranged in parallel to the main fuel valve (22; 122).

5. The gas turbine engine according to any one of the preceding claims, wherein the fuel supply system (9) comprises a plurality of main fuel valves (22; 122) and a plurality of auxiliary fuel valves (23; 123), each main fuel valve (22; 122) and each auxiliary fuel valve (23; 123) being fluidly coupled between the fuel supply line (17; 117) and at least a group of respective associated burners (18; 118).

6. The gas turbine engine according to any one of the preceding claims, wherein the fuel supply system (9) comprises, for each burner (18; 118), a respective shut-off valve, wherein the shut-off valves (25) are arranged between the main fuel valve (22; 122) and fuel inlets of respective burners (18; 118), and wherein the control unit (10) is configured to control the shut-off valves (25) to activate and deactivate each burner (18; 118) independently of the other burners (18; 118).

7. The gas turbine engine according to claim 6, wherein the control unit (10) is configured to deactivate at least a threshold number (NTH) of burners (18; 118) before starting using the auxiliary fuel valve (23; 123).

8. The gas turbine engine according to claim 7, wherein the control unit (10) is configured to activate and deactivate the burners (18; 118) so that, in any operation condition, the active burners (18; 118) form a single group of adjacent active burners (GA) and the inactive burners (18; 118) form a single group of adjacent inactive burners (GI) .

9. The gas turbine engine according to any one of claims 6 to 8, wherein the control unit (10) is configured to deactivate initially a first burner (18; 118), when all the burners (18; 118) are active, and to deactivate in succession active burners (18; 118) adjacent to an inactive burner (18; 118) .

10. A method of controlling a gas turbine engine comprising a combustor assembly (7; 107), having a plurality of burners (18; 118), the method comprising:
supplying a fuel flowrate (M2) to the burners (18; 118);
controlling the fuel flowrate (M2) using a main fuel valve (22; 122) in a first load range (LR1) from full load to a threshold partial load (LTH), the main fuel valve (22; 122) being arranged between a fuel supply line (17; 117) and a fuel plenum (20); and
controlling the fuel flowrate (M2) to at least a group of the burners (18; 118) using an auxiliary fuel valve (23; 123) in a second load range (LR2) from the threshold partial load (LTH) to a minimum load (ML), the auxiliary fuel valve (23; 123) being arranged between the fuel supply line (17; 117) and the fuel plenum (20).

11. The method according to claim 10, wherein the first load range (LR1) and the second load range (LR2) overlap in a load subrange (SR) including the threshold partial load (LTH) and wherein controlling the fuel flowrate (M2) using the main fuel valve (22; 122) comprises closing the main fuel valve (22; 122) outside the first load range (LR1).

12. The method according to claim 10 or 11, comprising activating and deactivating the burners (18; 118) so that, in any operation condition, the active burners (18; 118) form a single group of adjacent active burners (18; 118) and the inactive burners (18; 118) form a single group of adjacent inactive burners (18; 118).

13. The method according to claim 12, wherein activating the burners (18; 118) comprises activating only burners (18; 118) which are adjacent to another active burner (18; 118).

14. The method according to claim 12 or 13, wherein, after deactivating a first burner (18; 118), deactivating comprises deactivating only burners (18; 118) which are adjacent to another inactive burner (18; 118).

## Patentansprüche

1. Gasturbine, umfassend:
eine Brennkammeranordnung (7; 107), die eine Mehrzahl von Brennern (18; 118) aufweist;
ein Brennstoffzufuhrsystem (9), das dazu konfiguriert ist, eine Brennstoff-Strömungsrate (M2) an die Brenner (18; 118) zu liefern, und eine Brennstoffzufuhrleitung (17; 117) und ein Hauptbrennstoffventil (22; 122) zwischen der Brennstoffzufuhrleitung (17; 117) und den Brennern (18; 118) aufweist;
eine Steuereinheit (10), die dazu konfiguriert ist, die Brennstoff-Strömungsrate (M2) unter der Verwendung des Hauptbrennstoffventils (22; 122) in einem von Volllast zu einer Schwellwert-Teillast reichenden ersten Lastbereich (LR1) zu steuern;
wobei das Brennstoffzufuhrsystem (9) ein Hilfsbrennstoffventil (23; 123) umfasst, das zwischen der Brennstoffzufuhrleitung (17; 117) und mindestens einer Gruppe zugeordneter Brenner (18; 118) fluidisch gekoppelt ist;
und wobei die Steuereinheit (10) ferner dazu konfiguriert ist, die Brennstoff-Strömungsrate (M2) unter der Verwendung des Hilfsbrennstoffventils (23; 123) in einem von der Schwellwert-Teillast (LTH) zu einer Minimallast (ML) reichenden zweiten Lastbereich (LR2) zu steuern;
**dadurch gekennzeichnet, dass** das Brennstoffzufuhrsystem (9) ein Brennstoffplenum (20) umfasst und das Hauptbrennstoffventil (22; 122) und das Hilfsbrennstoffventil (23; 123) zwischen der Brennstoffzufuhrleitung (17; 117) und dem Brennstoffplenum (20) angeordnet sind.

2. Gasturbine gemäß Anspruch 1, wobei das Hauptbrennstoffventil (22; 122) eine erste Minimal-Nennströmungsrate (M2) und das Hilfsbrennstoffventil (23; 123) eine zweite Minimal-Nennströmungsrate (M2), die geringer als die erste Minimal-Nennströmungsrate (M2) ist, hat.

3. Gasturbine gemäß Anspruch 1 oder 2, wobei der erste Lastbereich (LR1) und der zweite Lastbereich (LR2) sich in einem Lastunterbereich (SR) überlappen, der die Schwellwert-Teillast (LTH) enthält, und die Steuereinheit (10) dazu konfiguriert ist, das Hauptbrennstoffventil (22; 122) außerhalb des ersten Lastbereichs (LR1) zu schließen.

4. Gasturbine gemäß einem der vorhergehenden Ansprüche, wobei das Hilfsbrennstoffventil (23; 123) zu dem Hauptbrennstoffventil (22; 122) parallel angeordnet ist.

5. Gasturbine gemäß einem der vorhergehenden Ansprüche, wobei das Brennstoffzufuhrsystem (9) eine Mehrzahl von Hauptbrennstoffventilen (22; 122) und eine Mehrzahl von Hilfsbrennstoffventilen (23; 123) umfasst, wobei jedes Hauptbrennstoffventil (22; 122) und jedes Hilfsbrennstoffventil (23; 123) zwischen der Brennstoffzufuhrleitung (17; 117) und mindestens einer Gruppe jeweils zugeordneter Brenner (18; 118) fluidisch gekoppelt ist.

6. Gasturbine gemäß einem der vorhergehenden Ansprüche, wobei das Brennstoffzufuhrsystem (9) für jeden Brenner (18; 118) ein jeweiliges Absperrventil umfasst, wobei die Absperrventile (25) zwischen dem Hauptbrennstoffventil (22; 122) und Brennstoffeinlässen jeweiliger Brenner (18; 118) angeordnet sind, und wobei die Steuereinheit (10) dazu konfiguriert ist, die Absperrventile (25) zum Aktivieren und Deaktivieren eines jeden Brenners (18; 118) unabhängig von den anderen Brennern (18; 118) zu steuern.

7. Gasturbine gemäß Anspruch 6, wobei die Steuereinheit (10) dazu konfiguriert ist, mindestens eine Schwellwert-Anzahl (NTH) von Brennern (18; 118) zu deaktivieren, bevor damit begonnen wird, das Hilfsbrennstoffventil (23; 123) zu verwenden.

8. Gasturbine gemäß Anspruch 7, wobei die Steuereinheit (10) dazu konfiguriert ist, die Brenner (18; 118) so zu aktivieren und zu deaktivieren, dass in einem beliebigen Betriebszustand die aktiven Brenner (18; 118) eine einzige Gruppe beieinanderliegender aktiver Brenner (GA) bilden und die inaktiven Brenner (18; 118) eine einzige Gruppe beieinanderliegender inaktiver Brenner (GI) bilden.

9. Gasturbine gemäß einem der Ansprüche 6 bis 8, wobei die Steuereinheit (10) dazu konfiguriert ist, anfänglich einen ersten Brenner (18; 118) zu deaktivieren, wenn alle Brenner (18; 118) aktiv sind, und nacheinander aktive Brenner (18; 118) zu deaktivieren, die neben einem inaktiven Brenner (18; 118) liegen.

10. Verfahren zum Steuern einer Gasturbine, die eine Brennkammeranordnung (7; 107) umfasst, die eine Mehrzahl von Brennern (18; 118) hat, wobei das Verfahren umfasst:
Liefern einer Brennstoff-Strömungsrate (M2) an die Brenner (18; 118);
Steuern der Brennstoff-Strömungsrate (M2) unter der Verwendung eines Hauptbrennstoffventils (22; 122) in einem von Volllast zu einer Schwellwert-Teillast reichenden ersten Lastbereich (LR1), wobei das Hauptbrennstoffventil (22; 122) zwischen einer Brennstoffzufuhrleitung (17; 117) und einem Brennstoffplenum (20) angeordnet ist; und
Steuern der an mindestens eine Gruppe der Brenner (18; 118) gelieferten Brennstoff-Strömungsrate (M2) unter der Verwendung eines Hilfsbrennstoffventils (23; 123) in einem von der Schwellwert-Teillast (LTH) zu einer Minimallast (ML) reichenden zweiten Lastbereich (LR2), wobei das Hilfsbrennstoffventil (23; 123) zwischen der Brennstoffzufuhrleitung (17; 117) und dem Brennstoffplenum (20) angeordnet ist.

11. Verfahren gemäß Anspruch 10, wobei der erste Lastbereich (LR1) und der zweite Lastbereich (LR2) sich in einem Lastunterbereich (SR) überlappen, der die Schwellwert-Teillast (LTH) enthält, und wobei das Steuern der Brennstoff-Strömungsrate (M2) unter der Verwendung des Hauptbrennstoffventils (22; 122) ein Schließen des Hauptbrennstoffventils (22; 122) außerhalb des ersten Lastbereichs (LR1) umfasst.

12. Verfahren gemäß Anspruch 10 oder 11, umfassend Aktivieren und Deaktivieren der Brenner (18; 118), sodass in einem beliebigen Betriebszustand die aktiven Brenner (18; 118) eine einzige Gruppe beieinanderliegender aktiver Brenner (18; 118) bilden und die inaktiven Brenner (18; 118) eine einzige Gruppe beieinanderliegender inaktiver Brenner (18; 118) bilden.

13. Verfahren gemäß Anspruch 12, wobei das Aktivieren der Brenner (18; 118) ein Aktivieren lediglich von Brennern (18; 118) umfasst, die neben einem weiteren aktiven Brenner (18; 118) liegen.

14. Verfahren gemäß Anspruch 12 oder 13, wobei nach einem Deaktivieren eines ersten Brenners (18; 118) das Deaktivieren ein Deaktivieren lediglich von Brennern (18; 118) umfasst, die neben einem weiteren inaktiven Brenner (18; 118) liegen.

## Revendications

1. Moteur à turbine à gaz, comprenant :
un ensemble chambre de combustion (7 ; 107), comportant une pluralité de brûleurs (18 ; 118) ;
un système d'alimentation en carburant (9), configuré pour fournir un débit de carburant (M2) aux brûleurs (18 ; 118) et comprenant une conduite d'alimentation en carburant (17 ; 117) et une vanne de carburant principale (22 ; 122) entre la conduite d'alimentation en carburant (17 ; 117) et les brûleurs (18 ; 118) ;
une unité de commande (10), configurée pour commander le débit de carburant (M2) à l'aide de la vanne de carburant principale (22 ; 122) dans une première plage de charge (LR1) allant de la pleine charge à un seuil de charge partielle ;
dans lequel le système d'alimentation en carburant (9) comprend une vanne de carburant auxiliaire (23 ; 123) couplée fluidiquement entre la conduite d'alimentation en carburant (17 ; 117) et au moins un groupe de brûleurs associés (18 ; 118) ;
et dans lequel l'unité de commande (10) est en outre configurée pour commander le débit de carburant (M2) à l'aide de la vanne de carburant auxiliaire (23 ; 123) dans une seconde plage de charge (LR2) allant du seuil de charge partielle (LTH) à une charge minimale (ML) ;
**caractérisé en ce que** le système d'alimentation en carburant (9) comprend un plenum de carburant (20) et **en ce que** la vanne de carburant principale (22 ; 122) et la vanne de carburant auxiliaire (23 ; 123) sont agencées entre la conduite d'alimentation en carburant (17 ; 117) et le plenum de carburant (20).

2. Moteur à turbine à gaz selon la revendication 1, dans lequel la vanne de carburant principale (22 ; 122) a un premier débit nominal minimal (M2) et la vanne de carburant auxiliaire (23 ; 123) a un second débit nominal minimal (M2) inférieur au premier débit nominal minimal (M2).

3. Turbine à gaz selon la revendication 1 ou 2, dans laquelle la première plage de charge (LR1) et la seconde plage de charge (LR2) se chevauchent dans une sous-plage de charge (SR) comprenant le seuil de charge partielle (LTH) et l'unité de commande (10) est configurée pour fermer la vanne de carburant principale (22 ; 122) en dehors de la première plage de charge (LR1).

4. Moteur à turbine à gaz selon l'une quelconque des revendications précédentes, dans lequel la vanne de carburant auxiliaire (23 ; 123) est agencée en parallèle à la vanne de carburant principale (22 ; 122).

5. Moteur à turbine à gaz selon l'une quelconque des revendications précédentes, dans lequel le système d'alimentation en carburant (9) comprend une pluralité de vannes de carburant principales (22 ; 122) et une pluralité de vannes de carburant auxiliaires (23 ; 123), chaque vanne de carburant principale (22 ; 122) et chaque vanne de carburant auxiliaire (23 ; 123) étant couplée fluidiquement entre la conduite d'alimentation en carburant (17 ; 117) et au moins un groupe de brûleurs associés respectifs (18 ; 118).

6. Moteur à turbine à gaz selon l'une quelconque des revendications précédentes, dans lequel le système d'alimentation en carburant (9) comprend, pour chaque brûleur (18 ; 118), une vanne d'arrêt respective, dans lequel les vannes d'arrêt (25) sont agencées entre la vanne de carburant principale (22 ; 122) et les arrivées de carburant des brûleurs (18 ; 118) respectifs, et dans lequel l'unité de commande (10) est configurée pour commander les vannes d'arrêt (25) afin d'activer et de désactiver chaque brûleur (18 ; 118) indépendamment des autres brûleurs (18 ; 118).

7. Moteur à turbine à gaz selon la revendication 6, dans lequel l'unité de commande (10) est configurée pour désactiver au moins un nombre seuil (NTH) de brûleurs (18 ; 118) avant de commencer à utiliser la vanne de carburant auxiliaire (23 ; 123).

8. Moteur à turbine à gaz selon la revendication 7, dans lequel l'unité de commande (10) est configurée pour activer et désactiver les brûleurs (18 ; 118) de sorte que, dans tout état de fonctionnement, les brûleurs (18 ; 118) actifs forment un groupe unique de brûleurs actifs adjacents (GA) et les brûleurs (18 ; 118) inactifs forment un groupe unique de brûleurs inactifs adjacents (Gl).

9. Moteur à turbine à gaz selon l'une des revendications 6 à 8, dans lequel l'unité de commande (10) est configurée pour désactiver initialement un premier brûleur (18 ; 118), lorsque tous les brûleurs (18 ; 118) sont actifs, et pour désactiver successivement les brûleurs actifs (18 ; 118) adjacents à un brûleur inactif (18 ; 118).

10. Procédé de commande d'un moteur à turbine à gaz comprenant un ensemble chambre de combustion (7 ; 107), ayant une pluralité de brûleurs (18 ; 118), le procédé comprenant :
la fourniture d'un débit de carburant c(M2) aux brûleurs (18 ; 118) ;
la commande du débit de carburant (M2) à l'aide d'une vanne de carburant principale (22 ; 122) dans une première plage de charge (LR1) allant de la pleine charge à un seuil de charge partielle (LTH), la vanne de carburant principale (22 ; 122) étant agencée entre une conduite d'alimentation en carburant (17 ; 117) et un plenum de carburant (20) ; et
la commande du débit de carburant (M2) vers au moins un groupe de brûleurs (18 ; 118) à l'aide d'une vanne de carburant auxiliaire (23 ; 123) dans une seconde plage de charge (LR2) allant du seuil de charge partielle (LTH) à une charge minimale (ML), la vanne de carburant auxiliaire (23 ; 123) étant agencée entre la conduite d'alimentation en carburant (17 ; 117) et le plenum de carburant (20).

11. Procédé selon la revendication 10, dans lequel la première plage de charge (LR1) et la seconde plage de charge (LR2) se chevauchent dans une sous-plage de charge (SR) comprenant le seuil de charge partielle (LTH) et dans lequel la commande du débit de carburant (M2) à l'aide de la vanne de carburant principale (22 ; 122) comprend la fermeture de la vanne de carburant principale (22 ; 122) en dehors de la première plage de charge (LR1).

12. Procédé selon la revendication 10 ou 11, comprenant l'activation et la désactivation des brûleurs (18 ; 118) de sorte que, dans tout état de fonctionnement, les brûleurs actifs (18 ; 118) forment un groupe unique de brûleurs (18 ; 118) actifs adjacents et les brûleurs inactifs (18 ; 118) forment un groupe unique de brûleurs (18 ; 118) inactifs adjacents.

13. Procédé selon la revendication 12, dans lequel l'activation des brûleurs (18 ; 118) comprend uniquement l'activation des brûleurs (18 ; 118) qui sont adjacents à un autre brûleur (18 ; 118) actif.

14. Procédé selon la revendication 12 ou 13, dans lequel, après avoir désactivé un premier brûleur (18 ; 118), la désactivation comprend la désactivation des seuls brûleurs (18 ; 118) qui sont adjacents à un autre brûleur (18 ; 118) inactif.
